Europäisches Patentamt

European Patent Office

Office européen des brevets

(19)

(11) Numéro de publication: **0 227 552 B1**

(12) **FASCICULE DE BREVET EUROPEEN**

(45) Date de publication de fascicule du brevet: **01.04.92** (51) Int. Cl.5: **G01N 25/18**

(21) Numéro de dépôt: **86402868.3**

(22) Date de dépôt: **19.12.86**

(54) **Sonde permettant de mesurer les propriétés thermiques des matériaux.**

(30) Priorité: **24.12.85 FR 8519137**

(43) Date de publication de la demande:
**01.07.87 Bulletin 87/27**

(45) Mention de la délivrance du brevet:
**01.04.92 Bulletin 92/14**

(84) Etats contractants désignés:
**CH DE GB IT LI SE**

(56) Documents cités:
**DE-B- 2 952 137**
**FR-A- 2 335 840**

**JOURNAL OF PHYSICS E. SCIENTIFIC INS-TRUMENTS, vol. 12, no. 11, novembre 1979, pages 1033-1035, The Institute of Physics, Londres, GB; J.R. BLOOMER et al.: "A semi-automatic field apparatus for the measure-ment of thermal conductivities of sedimen-tary rocks"**

**ELEKTROWÄRME, vol. 19, no. 5, mai 1961, pages 181-182; F. REINKE: "Über ein Experi-ment zur Messung der Wärmeübergangs-zahl"**

(73) Titulaire: **CENTRE SCIENTIFIOUE ET TECHNI-OUE DU BATIMENT**
**4, avenue du Recteur Poincaré**
**F-75782 Paris Cédex 16(FR)**

(72) Inventeur: **Laurent, Jean-Paul Philippe Char-les**
**61 Avenue Jules Vallés**
**F-38400 Saint-Martin D'Heres(FR)**
Inventeur: **Sallee, Hébert Xavier**
**10 Rue Charles Ferré**
**F-38400 Saint-Martin D'Heres(FR)**

(74) Mandataire: **Portal, Gérard et al**
**Cabinet Beau de Loménie 55, rue d'Amster-dam**
**F-75008 Paris(FR)**

## Description

La présente invention a pour objet une sonde rayonnant de la chaleur par effet Joule et permettant de mesurer les propriétés thermiques des matériaux.

Le comportement thermique des matériaux et notamment ceux utilisés dans les éléments de construction présente actuellement une grande importance du fait des programmes d'économie établis pour les années à venir par les nations industrialisées. Cela suppose donc une meilleure connaissance des caractéristiques physiques et thermiques des matériaux utilisés. Dans cette optique, il est essentiel de pouvoir mesurer de manière aussi précise que possible la conductivité thermique et la capacité calorifique locale au sein de ces matériaux lorsque ceux-ci sont soumis à des conditions thermiques et hydriques quelconques.

Aussi plusieurs sondes ont déjà été proposées afin de mesurer cette conductivité thermique.

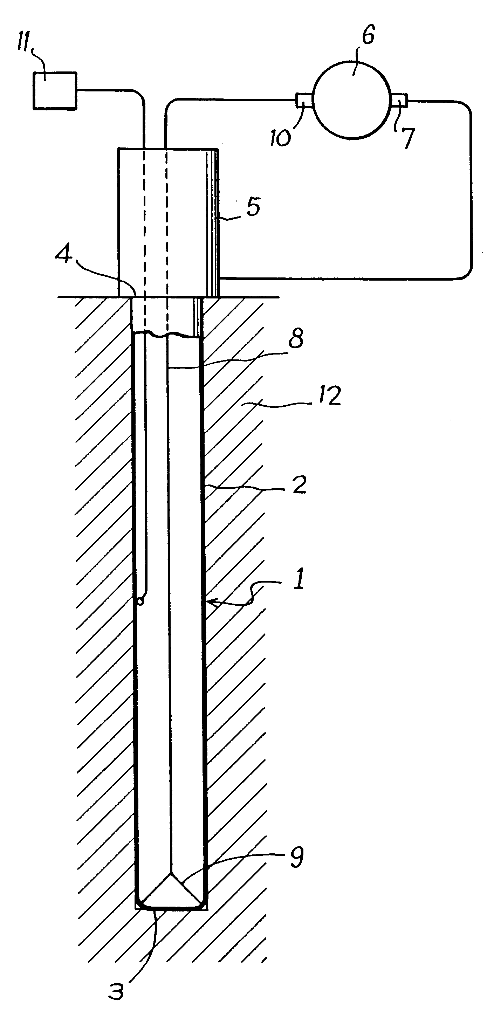

Un premier dispositif décrit, notamment, dans la publication J.Phys. E.Sci. Instrum., Vol. 17, 1984 de P. Prelovsek et col. consiste à insérer un filament chauffant et un thermocouple entre deux blocs constitués du matériau dont on veut mesurer la conductivité (voir en particulier à la figure 1).

Ce dispositif remarquable par sa simplicité présente, certes, des avantages mais présente l'inconvénient majeur de ne pouvoir être utilisé in situ car il exige la découpe de deux blocs préalablement à la mesure.

Un système un peu analogue a été décrit dans la publication Revue Phys. Appl. 17 (1982) p.217-225 où le filament chauffant et le capteur de température sont directement incorporés au sein du matériau lors de son coulage. Cela dispense naturellement du forage préalable d'un trou afin d'insérer la sonde mais cela présente l'inconvénient de rendre le dispositif inamovible.

En outre, il faut insérer le dispositif lors de la fabrication du matériau.

Afin d'éviter cet inconvénient, il est déjà connu des sondes introduites dans des trous pratiqués préalablement dans le matériau. Ces sondes pouvant être retirées après la mesure, il est donc possible d'effectuer plusieurs mesures à des endroits différents, sur le matériau fini. Ces sondes portatives peuvent donc être utilisées autant de fois que nécessaire avec comme seule limite l'usure du matériel employé.

Le principe réside dans le fait qu'une sonde qui contient une source de chaleur et un thermocouple est introduite dans le matériau dont il s'agit d'évaluer les propriétés thermiques.

Parmi les dispositifs qui se réfèrent à ce principe, il a été décrit dans le brevet FR 2 335 840, une sonde qui fait partie intégrante d'une cellule de mesure, nécessitant d'avoir accès aux deux extrémités de la sonde afin de pouvoir raccorder les fils à l'instrument de mesure. D'autre part, le métal constituant le tube étant de l'acier, la sonde nécessite une longueur relativement élevée afin d'obtenir une résistance électrique suffisante.

L'instrument de mesure décrit dans le brevet allemand n° DEB 2 952 137 est une sonde pour la mesure d'un paramètre thermique. Toutefois sa géométrie en forme de fil disposé en épingle, tant pour l'élément chauffant que pour le capteur de température, en fait un instrument spécifique à la mesure dans les gaz.

Dans la publication Journal of Food Science, volume 46 (1981) de M.S. BACHE-KHANDAN et col., une sonde constituée d'un élément tubulaire creux fermé à son extrémité (seringue hypodermique) dans lequel a été inséré un filament chauffant en forme de U et un thermocouple également en forme de U, les deux composants n'ayant naturellement aucun contact l'un avec l'autre. Une sonde analogue est également décrite dans NBS Building Series BSS149 (Thermal Behavior of Fine grained Soils).

Un autre système qui permet de remédier aux difficultés de mise en oeuvre des dispositifs qui viennent d'être décrits consiste à utiliser une aiguille à coudre par le trou de laquelle on passe le filament chauffant et le thermocouple.

Ces éléments se trouvent donc sans protection à l'extérieur, mis à part par le moyen d'une colle époxy. Le diamètre de ce dispositif est d'environ 0,55 mm.

Un autre dispositif a été décrit dans la publication faite par G.LEROY et col. à l'occasion des journées d'études sur les caractéristiques thermiques des sols et leur mesure in situ le 9 mars 1983 à Paris. Ce dispositif est constitué de deux tubes concentriques. Sur le tube intérieur en cuivre est spiralée une résistance chauffante type thermocoax alimentée en tension continue. Dans l'épaisseur du tube extérieur en acier inoxydable est soudé, à mi-hauteur de la sonde, un thermocouple K. L'espace compris entre les spires de l'élément chauffant et les deux tubes est rempli avec une graisse assez bonne conductrice de la chaleur et dont le rôle est d'homogénéiser les températures.Le diamètre de la sonde est de 12 mm. Un autre bobinage se référant au même principe est décrit dans la publication de JC BENET et col. (Mesure de la conductivité thermique des sols par sonde cylindrique en régime transitoire. Etude de l'influence du mode de mise en place de la sonde).

L'invention a pour but de résoudre le nouveau problème technique consistant à trouver une solution permettant d'utiliser une sonde contenant à la fois une source de chaleur et un thermocouple, destinée à être introduite dans le matériau et ayant :

a) une géométrie compatible avec une mise en place à posteriori ;

b) la possibilité de délivrer des signaux thermiques connus et mesurables ;

c) une solidité compatible avec la mise en place ;

d) un faible coût unitaire et donc une grande facilité de fabrication ;

e) un faible encombrement et un poids inférieur aux dispositifs analogues.

L'invention résoud ce problème technique pour la première fois de manière simple et satisfaisante.

Selon l'invention, la sonde est constituée d'un élément chauffant tubulaire creux associé à un thermocouple et relié à une source de courant électrique et est caractérisée en ce que ledit élément tubulaire est fermé à une extrémité.

Selon une variante préférée, l'élément tubulaire est relié à une borne de ladite source de courant électrique continu ou alternatif tandis qu'un filament conducteur, inséré à l'intérieur de l'élément tubulaire et en contact ponctuellement avec cet élément tubulaire de préférence à l'extrémité, est relié à l'autre borne de la source de courant électrique.

L'élément tubulaire doit présenter une résistivité élevée de préférence supérieure à $0,5 \cdot 10^{-6}\,\Omega.m$ et avantageusement supérieure à $0,7 \cdot 10^{-6}\,\Omega.m$ et inférieure à $1,3 \cdot 10^{-6}\,\Omega.m$.

L'homme de métier pourra choisir parmi les matériaux répondant à la condition précitée ceux qui conviennent le mieux. Il a été toutefois trouvé que les alliages de Nickel présentaient d'excellentes propriétés dans le cadre de l'invention. Parmi ceux-ci, on peut citer les alliages suivants :

|  | Résistivité $(\Omega.m) \times 10^{-6}$ |
|---|---|
| -Ni (60%) - Cr (16%) - Fe (24%) | 1,116 |
| -Ni (80%) - Cr (20%) | 1,07 |
| -Ni (90%) - Cr (10%) | 0,7 |
| -Ni (45%) - Cu(55%):constantan | 0,489 |

D'une manière générale, on obtient la résistance totale de l'élément réalisé par la formule :

$$R = 4 . \rho . \frac{L}{\pi (D_e{}^2 - D_i{}^2)}$$

où :

R : est la résistance totale $(\Omega)$

$\rho$ : la résistivité de l'alliage utilisé $(\Omega.m)$

L : la longueur de l'élément (m)

$D_e$ : le diamètre extérieur (m)

$D_i$ : le diamètre intérieur = $D_e$ - 2e où e est l'épaisseur de la paroi (m)

Il est tout-à-fait préférable d'utiliser un élément tubulaire ayant une paroi très mince (entre 0,05 et 0,15 mm par exemple).

L'adoption de parois très minces permet, en effet, d'atteindre des inerties thermiques très faibles. En effet, la masse par unité de longueur de l'élément chauffant est donnée par

m/L = 250 x $\pi$ x $(D_e{}^2 - D_i{}^2)$ x d (kg/m)

où d est la densité de l'alliage utilisé.

Par ailleurs, la faible épaisseur des parois minimise les pertes latérales le long de l'élément chauffant.

La section de l'élément est définie en fonction de l'utilisation envisagée

- si l'on souhaite utiliser l'élément dans des matériaux consolidés, on adoptera des sections de 3 à 5 mm autorisant un meilleur contact et ayant une solidité supérieure,

- si, par contre, on travaille dans des matériaux non consolidés, une forme type "aiguille" (section de

3

l'ordre de 1 mm) sera mieux adaptée.

Pour obtenir une rigidité suffisante, nécessaire à la mise en place de l'élément chauffant, l'alliage employé est soumis à un traitement thermique adapté.

Selon un mode de réalisation préféré de l'invention, le thermocouple est incrusté dans la paroi interne de l'élément tubulaire.

D'autres caractéristiques et avantages de l'invention seront mieux compris à la lecture de la description qui va suivre d'un mode de réalisation et en se référant à la figure unique qui est une vue en coupe longitudinale de la sonde introduite dans un matériau dont on veut mesurer les propriétés thermiques.

Selon la figure, la sonde 1 est un élément tubulaire 2 creux dont une extrémité 3 est fermée en arrondi, qui présente les caractéristiques suivantes :

| longueur | 100 mm |
|---|---|
| diamètre extérieur | 3,5 mm |
| épaisseur de la paroi | 0,07 mm |

Cet élément est fait d'un alliage Ni (80%) - Cr (20 %) et possède donc une résistance totale de l'ordre de 0,14Ω.

L'élément tubulaire 2 comporte à l'autre extrémité 4 ouverte une tête 5, creuse également, par laquelle il est relié à une borne d'une source 6 de courant électrique par l'intermédiaire d'une cosse 7.

Un fil gainé conducteur 8 en cuivre est présent à l'intérieur du tube et est fixé à l'extrémité 3 du tube en deux points opposés par l'intermédiaire d'une fourche 9. Le fil 8 sort par l'autre extrémité 4 ouverte de l'élément tubulaire et est relié par l'intermédiaire d'une cosse 10 à l'autre borne de la source électrique.

Un thermocouple 11 constitué de deux fils soudés à leur extrémité est fixé à la paroi interne de l'élément 2 à mi-longueur.

La sonde est introduite dans un matériau 12.

Par cette sonde, la très faible inertie thermique obtenue permet d'obtenir des signaux thermiques impossibles à réaliser à l'aide d'éléments classiques beaucoup plus massiques. Les puissances émises peuvent être très importantes (> 10 000 W/m$^2$) sans dommage pour l'élément. Le niveau de température de l'élément est aisément contrôlable par un capteur placé à l'intérieur.

Ainsi, ce système pourra être avantageusement utilisé chaque fois que l'on souhaite réaliser des signaux thermiques (température ou flux) d'amplitude et/ou de forme connus avec précision.

Par ailleurs, cette sonde peut être associée à des thermocouples supplémentaires en forme de tige, situés à une certaine distance de l'élément chauffant, de manière à évaluer simultanément, et de manière simple,la capacité calorifique du matériau.

**Revendications**

1. Sonde (1) rayonnant de la chaleur par effet Joule, utilisable pour mesurer les propriétés thermiques des matériaux, constituée d'un élément chauffant tubulaire (2) creux associé à un thermocouple (11) et relié à une source de courant électrique, caractérisée en ce que ledit élément tubulaire (2) est fermé à une extrémité.

2. Sonde selon la revendication 1, caractérisée en ce que l'élément tubulaire est relié à une borne de ladite source de courant électrique continu ou alternatif tandis qu'un fil gainé conducteur (8), inséré à l'intérieur de l'élément tubulaire (2) et en contact ponctuellement avec cet élément tubulaire, est relié à l'autre borne de la source de courant électrique.

3. Sonde selon la revendication 2, caractérisée en ce que le fil gainé conducteur (8) est en contact avec l'extrémité (3) de l'élément tubulaire.

4. Sonde selon l'une des revendications 1 à 3, caractérisée en ce que le thermocouple (11) est incrusté dans la paroi interne de l'élément tubulaire.

5. Sonde selon l'une des revendications précédentes, caractérisée en ce que l'élément tubulaire est constitué d'un matériau de très forte résistivité supérieure à 0,5 $\cdot$ 10$^{-6}$ Ω.m.

6. Sonde selon la revendication 5, caractérisée en ce que le matériau est un alliage de Nickel.

7. Sonde selon l'une des revendications 5 ou 6, caractérisée en ce que l'élément tubulaire possède des parois minces.

## Claims

1. Probe (1) radiating heat by the joule effect, usable for measuring the thermal properties of materials, constituted by a hollow tubular heating element (2) associated with a thermocouple (11), and connected to a source of electric current, characterized in that the said tubular element 52) is closed at one end.

2. Probe according to claim 1, characterized in that the tubular element is connected to one terminal of said source of direct or alternating electric current, while a sheathed conductive wire (8), inserted within the tubular element (2) and in pointwise contact with said tubular element, is connected to the other terminal of the electric current source.

3. Probe according to claim 2, characterized in that the sheathed conductive wire (8) is in contact with the end (3) of the tubular element.

4. Probe according to one of claims 1 to 3, characterized in that the thermocouple (11) is inlaid in the internal wall of the tubular element.

5. Probe according to one of the preceding claims, characterized in that the tubular element is composed of a material with a very high resistivity exceeding $0.5 \cdot 10^{-6}\,\Omega.m$.

6. Probe according to claim 5, characterized in that the material is a nickel alloy.

7. Probe according to one of claims 5 or 6, characterized in that the tubular element has thin walls.

## Patentansprüche

1. Sonde (1), die Wärme durch den Joule-Effekt abstrahlt, verwendbar zur Messung thermischer Eigenschaften von Materialien, mit einem hohlen, rohrförmigen Heizelement (2), das mit einem Thermoelement versehen und an eine elektrische Stromquelle angeschlossen ist,
**dadurch gekennzeichnet,**
daß das rohrförmige Element (2) an einem Ende geschlossen ist.

2. Sonde nach Anspruch 1, dadurch gekennzeichnet, daß das rohrförmige Element an eine Klemme der elektrischen Gleichstrom- oder Wechselstromquelle angeschlossen ist, während ein isolierter Leiter (8) in das Innere des rohrförmigen Elements (2) eingeführt ist und dort mit dem rohrförmigen Element punktweise in Kontakt steht, wobei der Leiter mit der anderen Klemme der elektrischen Stromquelle verbunden ist.

3. Sonde nach Anspruch 2, dadurch gekennzeichnet, daß der isolierte Leiter (8) mit dem Ende (3) des rohrförmigen Elements in Kontakt steht.

4. Sonde nach einem der Ansprüche 1 bis 3, dadurch gekennzeichnet, daß das Thermoelement (11) in die Innenwand des rohrförmigen Elements inkrustiert ist.

5. Sonde nach einem der vorstehenden Ansprüche, dadurch gekennzeichnet, daß das rohrförmige Element aus einem Material sehr hohen elektrischen Widerstands ist, der größer als $0.5 \cdot 10^{-6}\,\Omega \cdot m$ ist.

6. Sonde nach Anspruch 5, dadurch gekennzeichnet, daß das Material eine Nickellegierung ist.

7. Sonde nach einem der Ansprüche 5 oder 6, dadurch gekennzeichnet, daß das rohrförmige Element dünne Wandungen aufweist.